# FASCICULE DE BREVET EUROPEEN

(11) **EP 2 649 780 B1**
(45) Date de publication et mention de la délivrance du brevet: **14.11.2018**
(21) Numéro de dépôt: 11796954.3
(22) Date de dépôt: 06.12.2011
(51) Int. Cl.: H04M 1/725, G07F 7/10, G06Q 20/00, G06F 1/16, G07F 7/08, H04M 1/02, H04M 1/04

(54) **TERMINAL DE PAIEMENT COMPRENANT UN DISPOSITIF DE PAIEMENT ET UNE INTERFACE MODULAIRE FORMANT CAPOT OU ÉTUI POUR APPAIRER UN TERMINAL DE COMMUNICATION**
ZAHLUNGSTERMINAL MIT EINER ZAHLUNGSVORRICHTUNG UND EINER MODULAREN SCHNITTSTELLE IN FORM EINER ABDECKUNG ODER HAUBE ZUR PAARUNG EINES KOMMUNIKATIONSENDGERÄTS
PAYMENT TERMINAL COMPRISING A PAYMENT DEVICE AND A MODULAR INTERFACE FORMING A SHROUD OR HOOD FOR PAIRING A COMMUNICATION TERMINAL

(30) Priorité: 07.12.2010 FR 1060210; 07.12.2010 FR 1060204
(43) Date de publication de la demande: 16.10.2013
(73) Titulaire: Ingenico Group, 75015 Paris (FR)
(72) Inventeur: YERNAUX, Olivier, F-30290 Laudun L'ardoise (FR); BARNERON, Sylvain, 26000 Valence (FR)
(74) Mandataire: Vidon Brevets & Stratégie
(86) Numéro de dépôt international: PCT/EP2011/071858
(87) Numéro de publication internationale: WO 2012/076498

(56) Documents cités:
- EP-A1- 1 732 291
- US-A1- 2001 037 249
- US-B1- 6 598 845
- US-B1- 7 003 316

## Description

### 1. Domaine de l'invention

La présente invention se rapporte au domaine des terminaux de paiement électroniques. Plus particulièrement, la présente invention se rapporte à un nouveau type de terminal de paiement électronique qui peut être appairé.

### 2. Art antérieur

A l'heure actuelle, les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser les montants des transactions, et un clavier de saisie de ces mêmes montants ainsi que des codes confidentiels saisis par les clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'autorisation de débit.

Pour pouvoir communiquer avec l'extérieur, et notamment avec des serveurs bancaires, le terminal de paiement utilise donc des moyens de connexion. L'un de ces moyens consiste à utiliser un réseau de communication sans fil, par exemple GPRS (de l'anglais « *General Packet Radio Service* »). Le terminal de paiement est alors muni d'une carte SIM (de l'anglais « *Subscriber Identity Module* »). Il s'agit d'une puce contenant un microcontrôleur et de la mémoire. Cette carte SIM est associée à un abonnement téléphonique (de type transmission de données) qui doit être réglé par le commerçant. Outre le fait que ce type d'abonnement est relativement onéreux, la mise en oeuvre des fonctionnalités de communication est attribuée au terminal de paiement. Ainsi, en plus des fonctions de paiement, le terminal doit gérer des fonctions de communication, qui ne sont pas naturellement les fonctions que l'on attend d'un terminal de paiement.

Pour pallier le problème de coût de l'abonnement associé à la communication GPRS notamment, de nouveaux types de terminaux de paiement communiquent par l'intermédiaire d'un réseau de type « WiFi » (de l'anglais « *Wireless Fidelity* ») par exemple. Le commerçant n'est alors plus obligé de souscrire un abonnement particulier. Le terminal de paiement peut se connecter au réseau WiFi du commerçant et accéder, comme dans une connexion filaire, aux serveurs bancaires. Cependant, l'usage du terminal de paiement est alors limité à la zone de couverture du réseau WiFi, ce qui ne convient pas à une utilisation nomade (par exemple un médecin en visite chez ses patients).

Ainsi, il existe un besoin pour proposer un terminal de paiement qui puisse être utilisé par les commerçants nomades, donc en utilisant un réseau de communication sans fil de type GPRS/UMTS, tout en minimisant les coûts de mise en oeuvre d'un tel terminal de paiement. Dans ce contexte il est fait référence aux documents d'art antérieur US 6 598 845 B1, US 2001/037249 A1 et US 7 003 316 B1.

### 3. Exposé de l'invention

L'invention ne présente pas ces inconvénients de l'art antérieur. L'invention se rapporte plus particulièrement à un terminal de paiement qui se présente sous la forme d'un dispositif de paiement qui est physiquement appairé à un terminal de communication. Plus particulièrement, le terminal de communication auquel le dispositif de paiement est appairé est un téléphone mobile ou un téléphone intelligent (« smartphone » en anglais), c'est-à-dire un téléphone mobile disposant aussi de fonctions d'un assistant numérique personnel (PDA). Ainsi, l'invention permet de pallier les inconvénients de l'art antérieur et notamment permet de ne pas avoir recours à une ligne téléphonique dédiée pour réaliser une connexion au réseau de communication et aux serveurs tels que des serveurs d'autorisation ou des serveurs bancaires.

Par ailleurs, du fait de l'appairage du dispositif de paiement avec le terminal de communication, il convient de proposer une technique d'appairage permettant notamment :
- d'appairer des terminaux de communication de différents types à un même dispositif de paiement ;
- de sécuriser l'opération d'appairage entre le dispositif de paiement et le terminal de communication ;
- de faciliter l'opération d'appairage entre le dispositif de paiement et le terminal de communication, notamment en ce qui concerne les connexions à effectuer entre les éléments appairés ;
- de protéger le dispositif de paiement quand il n'est pas appairé au terminal de communication.

Dans un mode de réalisation particulier de l'invention, il est proposé un terminal de paiement possédant une première configuration dans laquelle il comprend un dispositif de paiement appairé avec un terminal de communication par une première interface modulaire. Ladite première interface modulaire comprend un support formant étui définissant un logement pour le terminal de communication et coopérant, par articulation, avec un couvercle permettant d'autoriser, en position ouverte, ou interdire, en position fermée, l'insertion ou l'extraction du terminal de communication dans ou hors de son logement. Le terminal de paiement comprend des moyens de fixation amovible du support sur une face d'appairage du dispositif de paiement.

Le principe général de l'invention consiste donc à utiliser une première interface modulaire comprenant un support formant étui pour le terminal de communication, cette première interface modulaire étant fixée de manière amovible au dispositif de paiement. Ainsi, dans cette première configuration du terminal de paiement, il est possible d'utiliser le même dispositif de paiement avec différents types de terminaux de communication. Il suffit pour cela de disposer de plusieurs interfaces modulaires adaptées chacune à l'un de ces différents types.

Selon une caractéristique particulière, le terminal de paiement possède une deuxième configuration dans laquelle il comprend ledit dispositif de paiement et une deuxième interface modulaire. Ladite deuxième interface modulaire comprend un support formant capot pour protéger ladite face d'appairage du dispositif de paiement. Le terminal de paiement comprend des moyens de fixation amovible du support sur la face d'appairage du dispositif de paiement.

Ainsi, dans cette deuxième configuration du terminal de paiement, on utilise le même dispositif de paiement que dans la première configuration. En revanche, il n'y a pas de terminal de communication et l'interface modulaire est différente en ce qu'elle est constituée uniquement d'un support formant capot, permettant de protéger une face d'appairage (face arrière) du dispositif de paiement.

Selon une caractéristique particulière, les moyens de fixation amovible du support, formant étui ou capot, sur la face d'appairage du dispositif de paiement comprennent :
- un premier ensemble d'éléments de fixation comprenant au moins un couple de premiers éléments de fixation, dont la solidarisation de l'un, compris dans le support, avec l'autre, compris dans le dispositif de paiement, est réalisée par un mouvement de translation du support par rapport au dispositif de paiement ; et
- un deuxième ensemble d'éléments de fixation comprenant au moins un couple de deuxièmes éléments de fixation, dont la solidarisation de l'un, compris dans l'interface modulaire, avec l'autre, compris dans le dispositif de paiement, empêche un mouvement de translation inverse du support par rapport au dispositif de paiement.

Ces deux ensembles d'éléments de fixation permettent de sécuriser la fixation du support formant étui sur le dispositif de paiement.

Selon une caractéristique particulière, le premier ensemble comprend :
- au moins un couple comprenant une butée possédant un épaulement et s'étendant à partir de ladite face d'appairage du dispositif de paiement, et un téton, situé sur une face de fixation du support et destiné à venir s'emboîter dans l'épaulement de la butée à l'issue dudit mouvement de translation ; et/ou
- au moins un couple comprenant une ouverture, formée dans ladite face d'appairage du dispositif de paiement, et une patte en forme de L s'étendant à partir d'une face de fixation du support et destinée à venir s'emboîter dans l'ouverture à l'issue dudit mouvement de translation.

Selon une caractéristique particulière, le deuxième ensemble comprend :
- au moins un couple comprenant un clip, s'étendant à partir de ladite face d'appairage du dispositif de paiement, et une ouverture formée sur une face de fixation du support et destinée à recevoir ledit clip à l'issue dudit mouvement de translation ; et/ou
- au moins un couple comprenant un taraudage, formé dans ladite face d'appairage du dispositif de paiement, et un trou formé dans le support, ledit trou venant en regard dudit taraudage à l'issue dudit mouvement de translation de sorte qu'une vis traversant ledit trou et vissée dans ledit taraudage permet d'empêcher le mouvement de translation inverse du support par rapport au dispositif de paiement.

Selon une caractéristique particulière, le terminal de paiement comprend des moyens de déclenchement d'une alarme sur détection d'un dévissage de ladite vis. Ainsi, on sécurise davantage la fixation du support formant étui sur le dispositif de paiement.

Selon une caractéristique particulière, le support comprend un logement de batterie pouvant loger une batterie principale du dispositif de paiement, et ledit trou est formé dans une face interne dudit logement de batterie. Un attaquant est donc forcé de déconnecter la batterie principale du dispositif de paiement pour pouvoir désolidariser le support formant étui d'avec le dispositif de paiement.

Selon une caractéristique particulière, ledit deuxième ensemble comprend un couple comprenant un logement de batterie principale formé dans ladite face d'appairage du dispositif de paiement, et une trappe de batterie permettant de fermer, après ledit mouvement de translation, ledit logement de batterie principale via une ouverture formée dans le support, ladite trappe formant une butée permettant d'empêcher le mouvement de translation inverse du support par rapport au dispositif de paiement.

Un attaquant est donc forcé d'ouvrir la trappe de batterie principale du dispositif de paiement pour pouvoir désolidariser le support formant étui d'avec le dispositif de paiement. Avantageusement, dans ce cas, le terminal de paiement comprend des moyens de déclenchement d'une alarme sur détection d'une ouverture de la trappe de batterie. Ainsi, on sécurise davantage la fixation du support formant étui sur le dispositif de paiement.

Selon une caractéristique particulière, ledit deuxième ensemble comprend un couple comprenant une batterie principale amovible pouvant loger dans un logement de batterie principale du dispositif de paiement, et une ouverture formée dans le support, ladite batterie principale étant placée dans le logement de batterie principale, après ledit mouvement de translation, et formant une butée permettant d'empêcher le mouvement de translation inverse du support par rapport au dispositif de paiement.

Un attaquant est donc forcé de déconnecter la batterie principale du dispositif de paiement pour pouvoir désolidariser le support formant étui d'avec le dispositif de paiement. Avantageusement, dans ce cas (ainsi que dans celui précité où la même contrainte est imposée à un attaquant), le terminal de paiement comprend des moyens de déclenchement d'une alarme sur détection d'une déconnexion de la batterie principale. Ainsi, on sécurise davantage la fixation du support formant étui sur le dispositif de paiement.

Selon une caractéristique particulière, ladite première interface modulaire comprend une carte électronique de connexion, comprenant un circuit imprimé sur lequel sont fixés : un premier connecteur, permettant de connecter ladite carte au dispositif de paiement, et un deuxième connecteur, permettant de connecter ladite carte au terminal de communication.

La carte électronique de connexion participe à l'aspect modulaire de l'interface modulaire. Elle permet d'adapter l'interface modulaire (et donc d'utiliser le même dispositif de paiement) avec différents types de terminaux de communication. Il suffit pour cela de disposer de plusieurs cartes électroniques de connexion adaptées chacune à l'un de ces différents types.

Le débattement possible de la carte permet, lorsque le terminal de communication est inséré dans le logement formé dans le support formant étui, au deuxième connecteur de se placer tout seul correctement pour son emboîtement dans le connecteur associé du terminal de communication. La carte peut donc être qualifiée d'« auto-centrante ».

Selon une caractéristique particulière, le premier connecteur est emboîté dans une nappe de connexion connectée à une carte mère du dispositif de paiement, en ce que le circuit imprimé est inséré, avec un débattement possible, dans une ouverture formée dans la face d'appairage du dispositif de paiement. La face d'appairage du dispositif de paiement et/ou une face de fixation du support comprennent :
- au moins un élément de reprise d'effort à l'insertion du terminal de communication dans son logement, permettant d'emboîter le deuxième connecteur dans un connecteur associé du terminal de communication ; et
- au moins un élément de reprise d'effort à l'extraction du terminal de communication hors de son logement, permettant de désemboîter le deuxième connecteur d'avec le connecteur associé du terminal de communication.

Ces éléments de reprise d'effort à l'insertion et à l'extraction permettent de faciliter l'opération d'appairage entre le dispositif de paiement et le terminal de communication, en ce qui concerne l'emboîtement et le désemboîtement de connecteurs des éléments appairés.

Selon une caractéristique particulière, la face d'appairage du dispositif de paiement et/ou une face de fixation du support comprennent :
- au moins un élément de limitation du débattement possible du circuit imprimé dans ladite ouverture, selon un axe d'insertion du circuit imprimé dans ladite ouverture ; et/ou
- au moins un élément de limitation du débattement possible du circuit imprimé dans ladite ouverture, selon un axe perpendiculaire à l'axe d'insertion du circuit imprimé dans ladite ouverture et compris dans le plan du circuit imprimé.

On évite ainsi un trop grand débattement de la carte, qui pourrait endommager les connecteurs (de la carte et du terminal de communication) lors de leur emboîtement.

Selon une caractéristique particulière, ladite carte électronique de connexion comprend des moyens de stockage d'un identifiant, et le dispositif de paiement comprend des moyens de lecture et vérification dudit identifiant et des moyens de déclenchement d'une alarme sur détection d'une vérification incorrecte dudit identifiant.

Ainsi, on sécurise l'appairage : la carte (et donc l'interface modulaire) ne peut jouer son rôle et permettre au dispositif de paiement de communiquer avec le terminal de communication que si cette carte est reconnue comme autorisée par le dispositif de paiement. Si ce n'est pas le cas, le dispositif de paiement bloque par exemple toute communication avec le terminal de communication.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A à 1D illustrent un exemple de terminal de paiement selon une première configuration comprenant un dispositif de paiement, un terminal de communication et une interface modulaire (comprenant un support formant étui) ;
- la figure 2 présente une vue éclatée du dispositif de paiement et de l'interface modulaire apparaissant sur la figure 1C ;
- les figures 3 et 4 illustrent un mode de réalisation particulier d'un support formant étui compris dans l'interface modulaire apparaissant sur la figure 2 ;
- les figures 5 et 6 illustrent un mode de réalisation particulier d'un couvercle du support formant étui compris dans l'interface modulaire apparaissant sur la figure 2;
- les figures 7 à 9 illustrent la cinématique d'articulation du couvercle, illustré sur les figures 5 et 6, avec le support formant étui, illustré sur les figures 3 et 4, pour l'extraction du terminal de communication ;
- la figure 10 illustre une carte de connexion comprise dans l'interface modulaire apparaissant sur la figure 2 ;
- les figures 11 et 12 illustrent l'assemblage de la carte de connexion illustrée sur la figure 10, avec le support formant étui et le dispositif de paiement ;
- les figures 13 et 14 illustrent un exemple de terminal de paiement selon une deuxième configuration comprenant un dispositif de paiement et une interface modulaire (comprenant un support formant capot).

### 5. Description d'un mode de réalisation de l'invention

Le principe général de l'invention repose sur l'appairage physique d'un dispositif de paiement à un terminal de communication, tel qu'un « smartphone », pour former un terminal de paiement selon une première configuration.

Ainsi, l'invention permet de pallier les inconvénients de l'art antérieur et notamment permet de ne pas avoir recours à une ligne téléphonique dédiée pour réaliser une connexion au réseau de communication et aux serveurs tels que des serveurs d'autorisation ou des serveurs bancaires.

Plus particulièrement, dans une première configuration, le dispositif de paiement est physiquement appairé avec le terminal de communication par l'intermédiaire d'une structure d'appairage particulière, appelée interface modulaire. Lorsqu'elle est utilisée, cette interface modulaire est fixée sur une face arrière du dispositif de paiement (aussi appelée face d'appairage). Cette structure est démontable, selon un mode de réalisation particulier de l'invention, en mettant en oeuvre une cinématique particulière.

Cette interface modulaire, selon l'invention, permet d'insérer et de retenir le terminal de communication dans un logement prévu à cet effet. Parmi les éléments de cette interface modulaire, selon l'invention, on distingue notamment une carte électronique de connexion, permettant de réaliser une connexion physique entre le dispositif de paiement et le terminal de communication.

Cette interface modulaire comprend d'autres éléments qui, selon l'invention, permettent d'assurer une sécurité d'usage du terminal de paiement formé du dispositif de paiement et du terminal de communication.

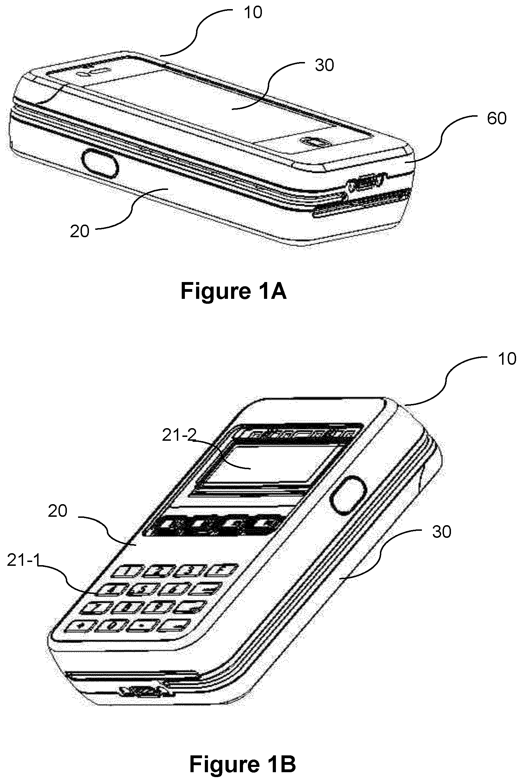

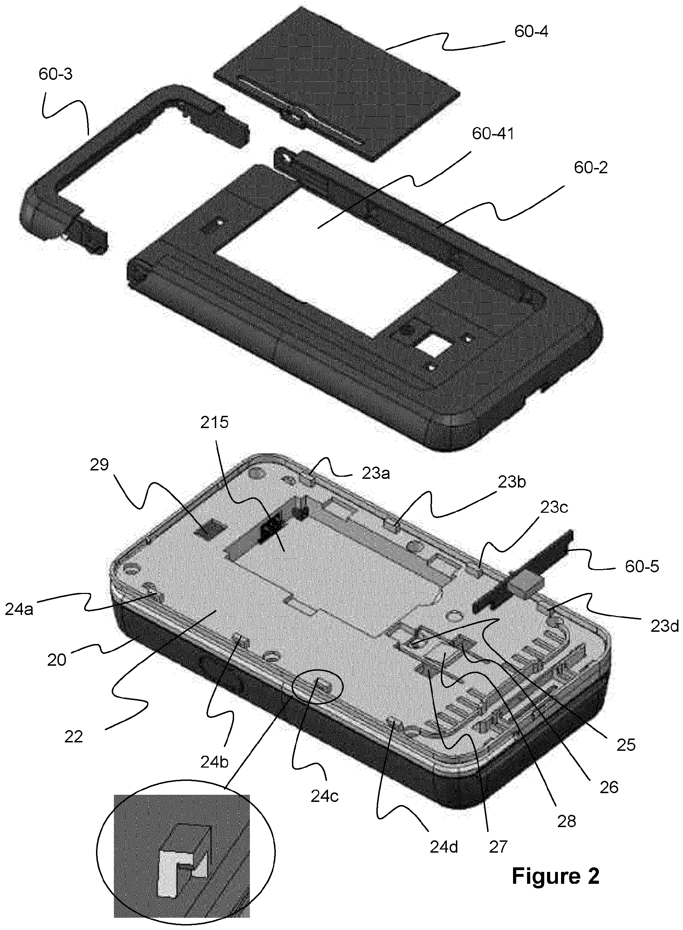

Plus particulièrement, un exemple de terminal de paiement selon une première configuration est décrit en relation avec les **figures 1A à 1D** **et** **2****.**

Le terminal de paiement (10) comprend deux composants généraux que sont le dispositif de paiement (20) et le terminal de communication (30), et qui sont appairés grâce à une interface modulaire (60).

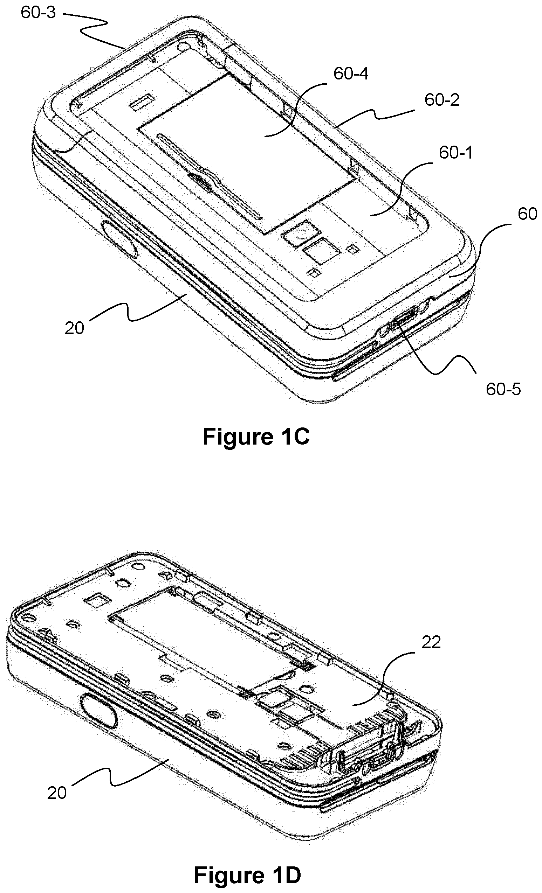

La figure 1A présente une vue en perspective du terminal de paiement (10), avec le terminal de communication (30), dont la face avant est visible, sur le dessus. La figure 1B présente une vue en perspective du terminal de paiement (10), avec le dispositif de paiement (20), dont la face avant est visible, sur le dessus. La figure 1C présente une vue en perspective du dispositif de paiement (20) et de l'interface modulaire (60), sans le terminal de communication (30). La figure 2 présente une vue éclatée du dispositif de paiement et de l'interface modulaire apparaissant sur la figure 1C. La figure 1D présente une vue en perspective du dispositif de paiement (20), avec la face arrière (face d'appairage) (22) sur le dessus.

Comme illustré dans un mode de réalisation illustratif et non limitatif de l'invention, le dispositif de paiement (20) comprend une face avant, visible sur la figure 1B, présentant un clavier pour la saisie d'information (21-1) et un écran de visualisation (21-2) des informations saisies. Le dispositif de paiement comprend, en face arrière, visible sur la figure 1D, une surface (22) (aussi appelée face d'appairage) permettant la fixation de l'interface modulaire (60) pour l'appairage du terminal de communication (30).

Plus particulièrement, dans cette première configuration, l'interface modulaire définit un logement (60-1) d'insertion et d'appairage du terminal de communication (30). Ce logement (60-1) est ouvert pour permettre l'accès direct à la face avant du terminal de communication (30) (et donc notamment à l'écran et au bouton de navigation présents sur cette face avant).

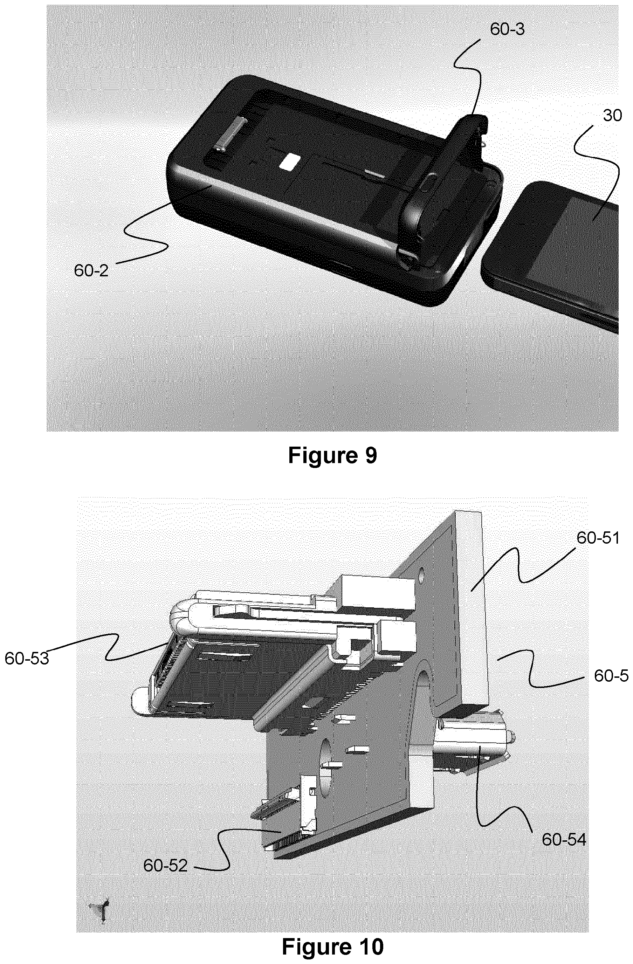

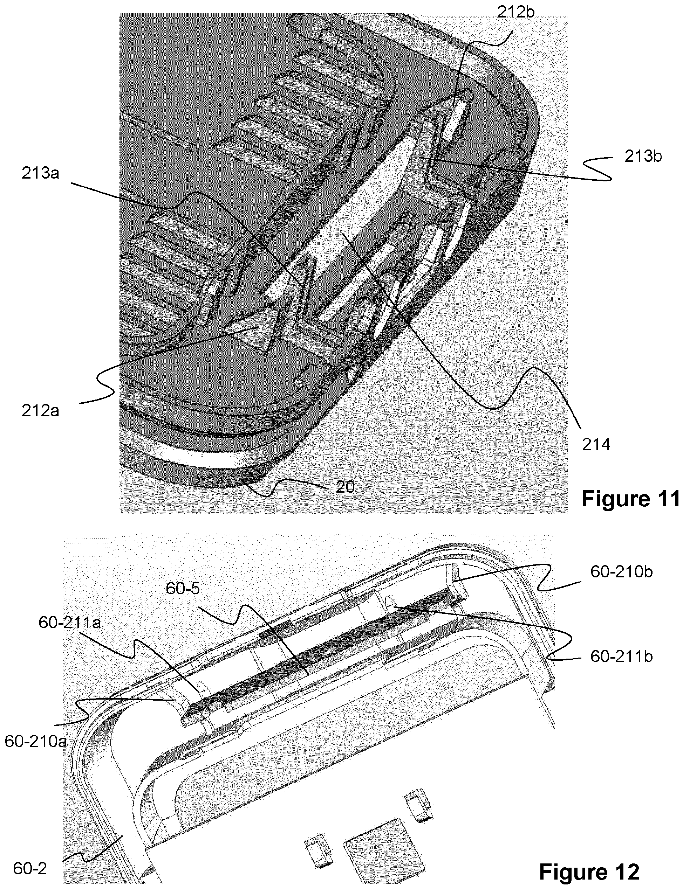

Plus précisément, l'interface modulaire (60) comprend :
- un support formant étui (60-2), destiné à être monté solidaire de la face d'appairage (22) du dispositif de paiement ((20) et définissant le logement précité (60-1) pour le terminal de communication (30) ;
- un couvercle (60-3) coopérant par articulation avec le support (60-2), et pouvant prendre une position fermée, dans laquelle il ferme le logement précité (60-1) et maintient le terminal de communication (30) s'il a préalablement été inséré dans le logement, et une position ouverte, dans laquelle il permet d'insérer dans ou d'extraire du logement le terminal de communication ;
- une trappe de batterie (60-4), permettant de fermer un logement de batterie principale (215) formé dans la face d'appairage (22) du dispositif de paiement (20), via une ouverture (60-41) formée dans le support formant étui (60-2) ; et
- une carte électronique de connexion (60-5) (voir ci-après la discussion des figures 10 à 12).

Si on veut utiliser le dispositif de paiement (20) avec différents types de terminaux de communication, il suffit de disposer de plusieurs interfaces modulaires adaptées chacune à l'un de ces différents types de terminaux de communication.

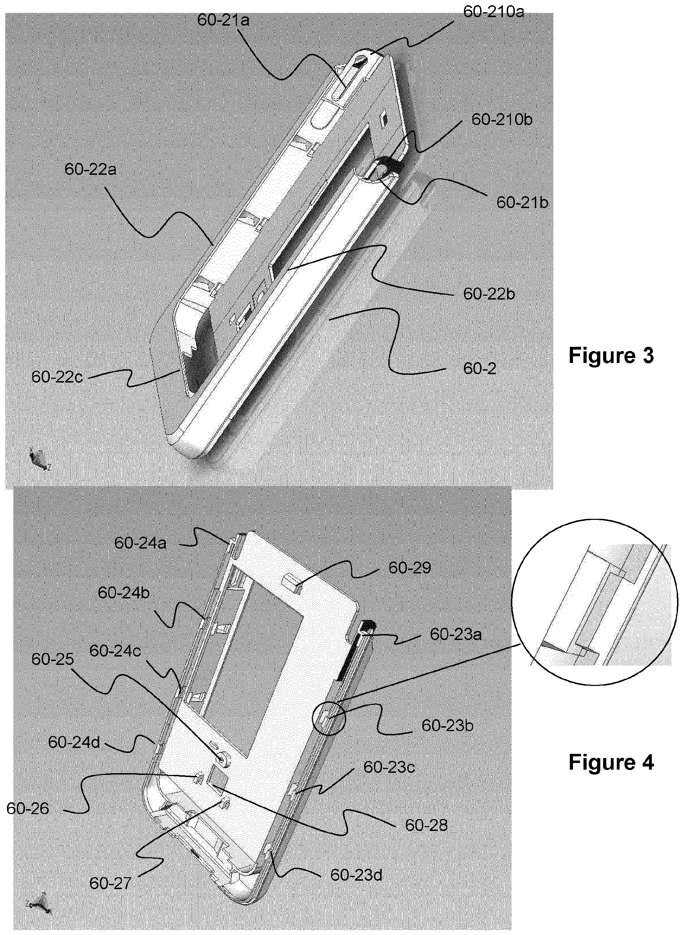

On présente maintenant, en relation avec les **figures 2** **et** **4****,** une pluralité de moyens de fixation amovible de l'interface modulaire (60) (et plus précisément du support (60-2)) sur la face d'appairage (22) du dispositif de paiement (20), dans un mode de réalisation particulier.

Parmi ces moyens de fixation, on distingue deux ensembles d'éléments de fixation.

Un premier ensemble d'éléments de fixation comprend au moins un couple de premiers éléments de fixation, dont la solidarisation de l'un, compris dans le support, avec l'autre, compris dans le dispositif de paiement, est réalisée par un mouvement de translation du support par rapport au dispositif de paiement. Ce premier ensemble d'éléments de fixation permet un verrouillage du support par rapport au dispositif de paiement dans cinq des six degrés de liberté possibles (le sixième degré de liberté, non verrouillé, étant celui selon l'axe de la translation précitée).

Un deuxième ensemble d'éléments de fixation comprend au moins un couple de deuxièmes éléments de fixation, dont la solidarisation de l'un, compris dans l'interface modulaire, avec l'autre, compris dans le dispositif de paiement, empêche un mouvement de translation inverse (par rapport à celui précité) du support par rapport au dispositif de paiement. Ce deuxième ensemble d'éléments de fixation permet un verrouillage du support par rapport au dispositif de paiement dans le sixième degré de liberté non verrouillé par le premier ensemble d'éléments de fixation.

On présente maintenant en détail les éléments de fixation compris dans chacun de ces premier et deuxième ensembles, dans un exemple de réalisation.

Le premier ensemble comprend huit couples « butée / téton » (ce nombre de couple n'est pas limitatif), répartis sur les deux longueurs de la face d'appairage du dispositif de paiement. Chaque butée (23a à 23d, 24a à 24d) possède un épaulement et s'étend à partir de la face d'appairage du dispositif de paiement. Chaque téton (60-23a à 60-23d, 60-24a à 60-24d) est situé sur la face de fixation du support et est destiné à venir s'emboîter dans l'épaulement de la butée associée, à l'issue du mouvement de translation du support par rapport au dispositif de paiement.

Le premier ensemble comprend également trois couples « ouverture / patte en forme de L » (ce nombre de couple n'est pas limitatif). Chaque ouverture (26, 27, 29) est formée dans la face d'appairage du dispositif de paiement. Chaque patte en forme de L (60-26, 60-27, 60-29) s'étend à partir de la face de fixation du support et est destinée à venir s'emboîter dans l'ouverture associée à l'issue du mouvement de translation du support par rapport au dispositif de paiement.

Le deuxième ensemble comprend un couple « clip / ouverture » (ce nombre de couple n'est pas limitatif). Le clip (28) s'étend à partir de la face d'appairage du dispositif de paiement, et comprend une lame présentant une tolérance à la déformation. L'ouverture (60-28) est formée sur la face de fixation du support et est destinée à recevoir le clip à l'issue du mouvement de translation du support par rapport au dispositif de paiement.

Le deuxième ensemble comprend également un couple « taraudage / trou » coopérant avec une vis. Le taraudage (25) est formé dans la face d'appairage du dispositif de paiement. Le trou (60-25) est formé dans le support. Le trou vient en regard du taraudage à l'issue du mouvement de translation du support par rapport au dispositif de paiement. La vis (non illustrée) traverse le trou et est vissée dans le taraudage. Ceci permet d'empêcher le mouvement de translation inverse du support par rapport au dispositif de paiement.

Optionnellement, le terminal de paiement (10) comprend des moyens (non illustrés) de déclenchement d'une alarme sur détection d'un dévissage de la vis. Ces moyens comprennent par exemple une lame métallique venant en contact électrique avec une borne à une tension prédéterminée, sous la pression de l'extrémité de la vis quand celle-ci est vissée dans le taraudage. Cette lame, qui forme un capteur, est par exemple reliée à un processeur compris sur une carte mère du dispositif de paiement. En fonction de la valeur de la tension à laquelle se trouve la lame, le processeur en déduit si la vis est vissée ou dévissée et peut prendre une décision de déclenchement d'une alarme.

Dans une variante (non illustrée), le support comprend un logement de batterie pouvant loger une batterie principale du dispositif de paiement, et le trou formé dans le support est formé dans une face interne de ce logement de batterie. Ainsi, un attaquant est forcé de déconnecter la batterie principale du dispositif de paiement pour pouvoir désolidariser le support formant étui (60-2) d'avec le dispositif de paiement (20). Optionnellement, dans cette variante, le terminal de paiement (10) comprend des moyens (non illustrés) de déclenchement d'une alarme sur détection d'une déconnexion de la batterie principale. Ces moyens comprennent par exemple un processeur compris sur une carte mère du dispositif de paiement. Ce processeur est capable de détecter une absence d'alimentation provenant de la batterie principale et peut prendre une décision de déclenchement d'une alarme.

Dans l'exemple illustré sur les figures, le deuxième ensemble comprend également un couple « logement de batterie principale / ouverture » coopérant avec une trappe de batterie. Le logement de batterie principale (215) est formé dans la face d'appairage du dispositif de paiement. L'ouverture (60-41) est formée dans le support. La trappe de batterie (60-4) est placée pour fermer, après le mouvement de translation du support par rapport au dispositif de paiement, le logement de batterie principale via l'ouverture (60-41). La trappe de batterie forme alors une butée pour le bord du support entourant l'ouverture (60-41), empêchant ainsi le mouvement de translation inverse du support par rapport au dispositif de paiement.

Optionnellement, le terminal de paiement (10) comprend des moyens (non illustrés) de déclenchement d'une alarme sur détection d'une ouverture de la trappe de batterie. Ces moyens comprennent par exemple une lame métallique venant en contact électrique avec une borne à une tension prédéterminée, quand la batterie principale est insérée dans son logement. Cette lame, qui forme un capteur, est par exemple reliée à un processeur compris sur une carte mère du dispositif de paiement. En fonction de la valeur de la tension à laquelle se trouve la lame, le processeur en déduit si la trappe de batterie est ouverte ou fermée et peut prendre une décision de déclenchement d'une alarme.

Dans une variante (non illustrée), le deuxième ensemble comprend un couple « batterie principale / ouverture ». La batterie principale amovible peut loger dans un logement de batterie principale du dispositif de paiement. L'ouverture (60-41) est formée dans le support. La batterie principale est placée dans le logement de batterie principale, après le mouvement de translation du support par rapport au dispositif de paiement. La batterie forme alors une butée, empêchant ainsi le mouvement de translation inverse du support par rapport au dispositif de paiement. Optionnellement, dans cette variante, le terminal de paiement (10) comprend des moyens (non illustrés) de déclenchement d'une alarme sur détection d'une déconnexion de la batterie principale. Un exemple de réalisation de tels moyens a déjà été donné ci-dessus (processeur capable de détecter une absence d'alimentation provenant de la batterie principale et pouvant prendre une décision de déclenchement d'une alarme).

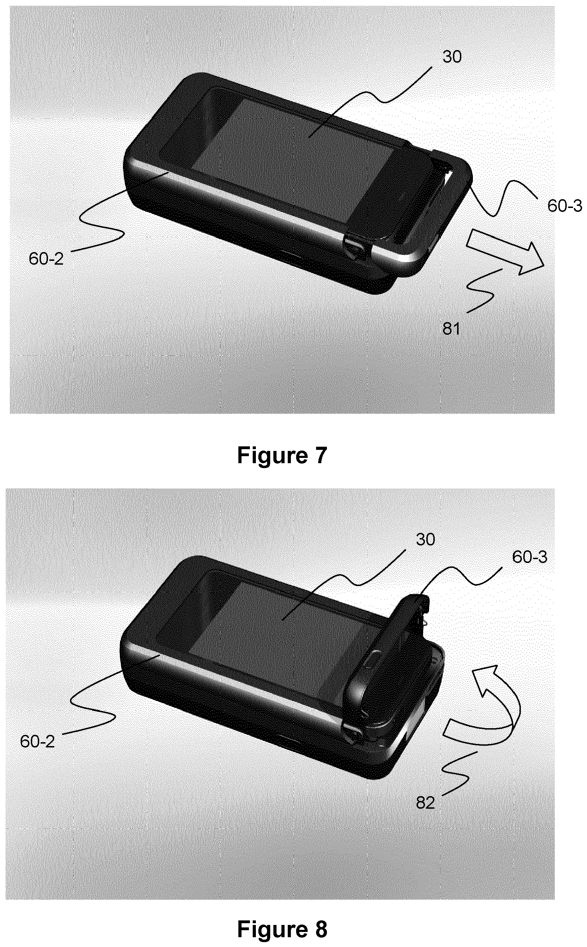

On présente maintenant, en relation avec les **figures 7 à 9****,** la cinématique d'articulation du couvercle (60-3) avec le support formant étui (60-2), pour l'extraction du terminal de communication (30).

On suppose donc que le terminal de communication (30) est inséré dans le logement (60-1, figure 1C) défini par le support formant étui (60-2), et que le couvercle (60-3) est en position fermée, comme illustré sur la figure 1A. Dans cette position fermée, le couvercle (60-3) ferme le logement et y maintient le terminal de communication.

Dans une première étape, le couvercle (60-3) passe de la position fermée à une position intermédiaire (illustrée sur la figure 7), par un mouvement de translation par rapport au support formant étui (60-2). Sur la figure 7, ce mouvement de translation est symbolisé par la flèche référencée 81. Dans la position intermédiaire, le couvercle ne maintient pas le terminal de communication (ce dernier peut se déplacer en translation dans le logement), mais l'empêche de sortir entièrement du logement.

Dans une deuxième étape, le couvercle (60-3) passe de la position intermédiaire à une position ouverte (illustrée sur la figure 8), par un mouvement de rotation par rapport au support formant étui (60-2). Sur la figure 8, ce mouvement de rotation est symbolisé par la flèche référencée 82. Le couvercle étant dans la position ouverte, le terminal de communication (30) peut être extrait de son logement, comme illustré sur la figure 9.

Pour l'insertion du terminal de communication (30) dans le logement du support formant étui (60-2), la cinématique d'articulation du couvercle (60-3) est obtenue en inversant l'ordre des étapes précitées : le couvercle étant dans la position ouverte, le terminal de communication (30) peut être inséré dans son logement, puis le couvercle (60-3) passe de la position ouverte à la position intermédiaire, et enfin le couvercle (60-3) passe de la position intermédiaire à la position fermée.

On présente maintenant, en relation avec les **figures 3****,** **5 et 6****,** un exemple de réalisation des moyens d'articulation permettant de mettre en oeuvre les cinématiques d'extraction et insertion décrites ci-dessus.

Comme illustré sur la figure 3, le support formant étui (60-2) définit trois (60-22a, 60-22b et 60-22c) des quatre côtés du logement (60-1) pour le terminal de communication (le quatrième côté du logement étant défini par le couvercle (60-3)). A l'extrémité de chacun des deux côtés (60-22a, 60-22b) du support formant étui (60-2) qui coopèrent avec le couvercle (60-3), le support formant étui (60-2) comprend un bras (60-210a, 60-210b) possédant une fente (60-21a, 60-21b). Chaque fente comprend une partie rectiligne et se termine par une partie circulaire.

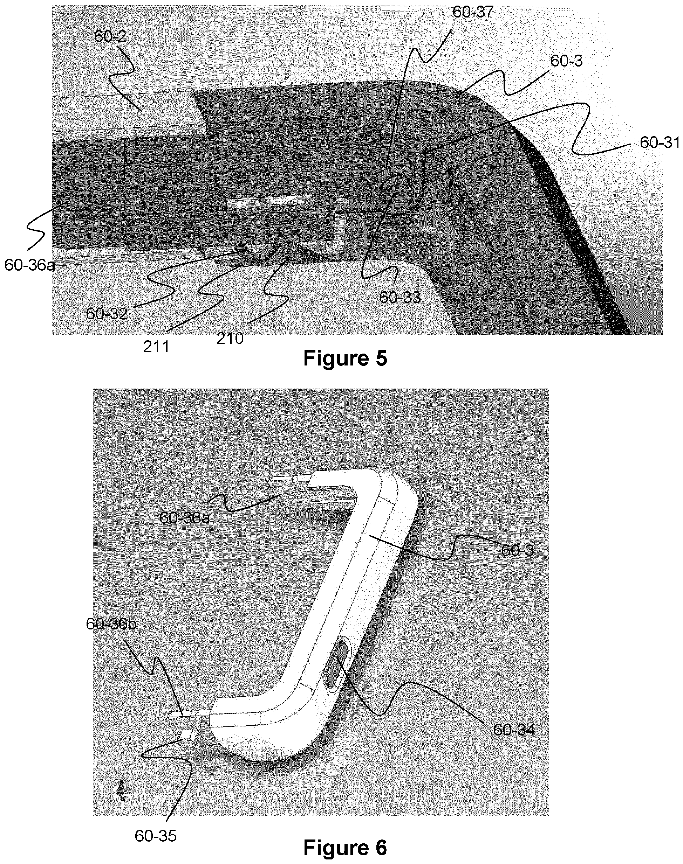

Comme illustré sur la figure 6, le couvercle (60-3) comprend deux bras (60-36a, 60-36b), à partir de chacun desquels s'étend un ergot (60-35) possédant une forme circulaire avec deux méplats. Le couvercle comprend également un bouton (60-34) permettant d'appuyer sur le bouton marche/arrêt du terminal de communication quand celui-ci est inséré dans le logement de l'interface modulaire.

Chacun des ergots (60-35) coopère avec une des fentes (60-21a, 60-21b) en coulissant dans la partie rectiligne de la fente, pendant le mouvement de translation, et en tournant à l'intérieur de la partie circulaire de la fente, pendant le mouvement de rotation.

On présente maintenant, en relation avec la figure 5, un exemple de réalisation de moyens permettant de maintenir le couvercle (60-3) dans la position fermée. L'interface modulaire comprend deux éléments élastiques (60-37), par exemple deux ressorts à une spire enroulée autour d'un plot (60-33) du couvercle. Chaque élément élastique comprend une première extrémité (60-31), fixée à un bras (60-36a) du couvercle, et une deuxième extrémité libre (60-32), formant crochet et coopérant avec un élément de blocage (protubérance à double pente) (210) et une cavité (211) formées dans la face d'appairage du dispositif de paiement (ou dans le support, dans une variante de réalisation). Quand le couvercle passe de la position intermédiaire à la position fermée, la deuxième extrémité (60-32) du ressort (60-37) glisse sur l'élément de blocage (210) pour venir se loger dans la cavité (211).

On présente maintenant, en relation avec les **figures 10 à 12****,** un exemple de réalisation de la carte électronique de connexion (60-5) comprise dans l'interface modulaire (60), ainsi qu'un exemple de montage de cette carte entre le dispositif de paiement (20) et le support formant étui (60-2).

Dans l'exemple illustré sur la figure 10, la carte électronique de connexion (60-5) comprend un circuit imprimé (60-51) sur lequel sont fixés :
- un premier connecteur (60-52), permettant de connecter la carte au dispositif de paiement (20),
- un deuxième connecteur (60-53), permettant de connecter la carte au terminal de communication (30), et
- un troisième connecteur (60-54), permettant de connecter la carte à un dispositif externe (par exemple un chargeur).

Lors du montage de l'interface modulaire (60) sur la face d'appairage du dispositif de paiement, on procède comme suit :
a) on insère la partie basse de la carte électronique de connexion (60-5), avec un débattement possible, dans une ouverture (214) formée dans la face d'appairage du dispositif de paiement ;
b) on fixe le support formant étui (60-2) sur la face d'appairage du dispositif de paiement (voir ci-dessus la description des figures 2 et 4) ;
c) on fixe la trappe de batterie principale (60-4) sur la face d'appairage du dispositif de paiement (dans le mode de réalisation où cette trappe participe au blocage du support formant étui (60-2) sur la face d'appairage du dispositif de paiement) ;
d) on monte le couvercle (60-3) en articulation sur le support formant étui (60-2) (insertion des ergots (60-35 ; figure 6) dans les fentes (60-21a, 60-21b ; figure 3). Dans une variante, cette étape d) est réalisée avant l'étape b) ou entre l'étape b) et l'étape c).

Lors de l'étape a), le premier connecteur (60-52) - qui se trouve dans la partie basse de la carte électronique de connexion (60-5) qui est insérée dans l'ouverture (214) - est emboîté (de manière classique) dans une nappe de connexion (non représentée) connectée à une carte mère (non représentée) du dispositif de paiement.

Le débattement possible de la carte (60-5) dans l'ouverture (214) correspond par exemple à une liberté de déplacement, de type rotule, de quelques degrés dans plusieurs directions. Ce débattement possible permet, lorsque le terminal de communication est inséré dans le logement (60-1) formé dans le support formant étui (60-2), au deuxième connecteur (60-53) de se placer tout seul correctement pour son emboîtement dans un connecteur femelle associé du terminal de communication (30). La carte peut donc être qualifiée d'« auto-centrante ».

La face d'appairage du dispositif de paiement (20) comprend deux poutres (213a, 213b) s'étendant à proximité de l'ouverture (214) et constituant des éléments de reprise d'effort à l'insertion du terminal de communication dans son logement, permettant d'emboîter le deuxième connecteur (60-53) de la carte (60-5) dans le connecteur femelle associé du terminal de communication.

Le support formant étui (60-2) comprend deux butées (60-210a, 60-210b) constituant des éléments de reprise d'effort à l'extraction du terminal de communication hors de son logement, permettant de désemboîter le deuxième connecteur (60-53) de la carte (60-5) d'avec le connecteur femelle associé du terminal de communication.

La face d'appairage du dispositif de paiement (20) comprend deux autres butées (60-212a, 60-212b), constituant des éléments de limitation du débattement possible du circuit imprimé (60-51) dans l'ouverture(214), selon un axe perpendiculaire à l'axe d'insertion du circuit imprimé dans cette ouverture (214) et compris dans le plan du circuit imprimé.

Le support formant étui (60-2) comprend deux protubérances en forme d'ogive (60-211a, 60-211b), constituant des éléments de limitation du débattement possible du circuit imprimé (60-51) dans l'ouverture (214), selon un axe d'insertion du circuit imprimé dans cette ouverture (214).

Dans un mode de réalisation particulier, la carte électronique de connexion (60-5) comprend des moyens (par exemple un processeur et une mémoire) de stockage d'un identifiant (associé par exemple à un type de terminal de communication), et le dispositif de paiement comprend des moyens (par exemple un processeur de la carte mère) de lecture et vérification de cet identifiant, et de déclenchement d'une alarme sur détection d'une vérification incorrecte. Par exemple, en cas de déclenchement d'une alarme, le dispositif de paiement (20) bloque toute communication avec le terminal de communication (30).

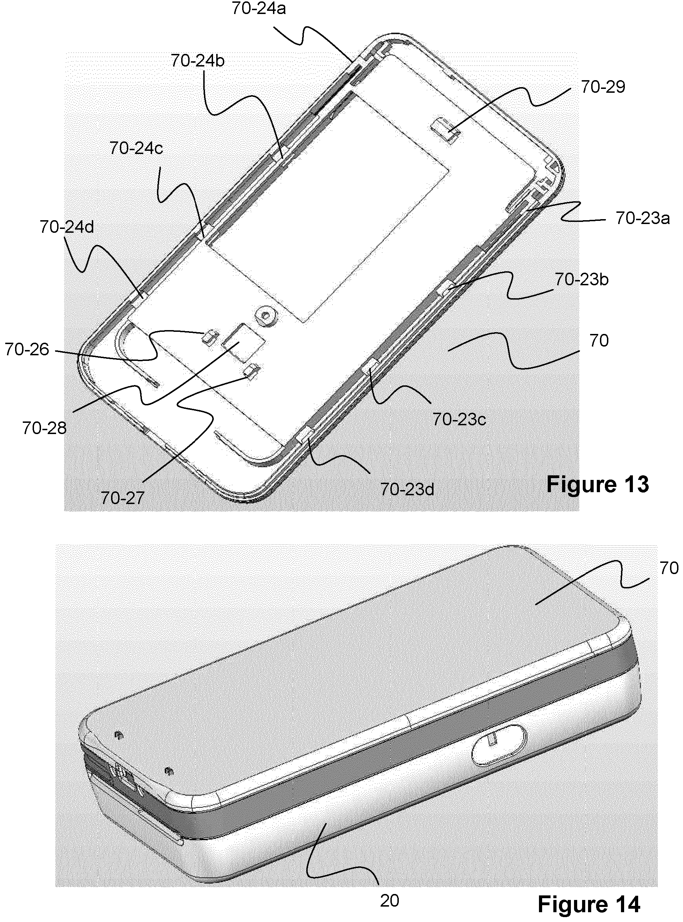

Les **figures 13 et 14** illustrent un exemple de terminal de paiement selon une deuxième configuration comprenant le dispositif de paiement (20) et une interface modulaire modifiée (70), mais pas de terminal de communication.

En d'autres termes, par rapport à celle de la première configuration (illustrée sur les figures 1A à 1D et 2 à 12, et discutée ci-dessus), le dispositif de paiement (20) est inchangé, l'interface modulaire est modifiée et il n'y a pas de terminal de communication.

L'interface modulaire modifiée (70) est constituée uniquement d'un support formant capot, permettant de protéger la face d'appairage du dispositif de paiement.

La face arrière (faxe de fixation au dispositif de paiement) du support formant capot (70) est illustrée sur la figure 13. La figure 14 présente une vue en perspective du terminal de paiement selon la deuxième configuration, avec la face avant du support formant capot (70) visible, sur le dessus.

Le support formant capot (70) comprend des moyens de fixation similaires à certains de ceux compris dans le support formant étui (60) de la première configuration. Ainsi, le dispositif de paiement (20) peut être utilisé de manière interchangeable, soit dans la première configuration, soit dans la deuxième configuration.

Plus précisément, dans l'exemple de la figure 13, le support formant capot (70) comprend les moyens de fixation suivants :
- huit tétons (70-23 a à 70-23 d, 70-24a à 70-24d), destinés chacun à venir s'emboîter, à l'issue d'un mouvement de translation du support formant capot (70) par rapport au dispositif de paiement (20), dans l'épaulement d'une des butées associées (23a à 23d, 24a à 24d) s'étendant à partir de la face d'appairage du dispositif de paiement (20) ;
- trois pattes en forme de L (70-26, 70-27, 70-29), destinées chacune à venir s'emboîter, à l'issue du mouvement de translation du support formant capot (70) par rapport au dispositif de paiement (20), dans l'une des ouvertures associées (26, 27, 29) formées dans la face d'appairage du dispositif de paiement ;
- une ouverture (70-28) formée sur la face de fixation du support formant capot (70) et destinée à recevoir, à l'issue du mouvement de translation du support formant capot (70) par rapport au dispositif de paiement (20), le clip (28) s'étendant à partir de la face d'appairage du dispositif de paiement.

## Revendications

1. Terminal de paiement (10), possédant une première configuration dans laquelle il comprend un dispositif de paiement (20) appairé avec un terminal de communication (30) par une première interface modulaire (60), ladite première interface modulaire comprend un support formant étui (60-2) définissant un logement (60-1) pour le terminal de communication et coopérant, par articulation, avec un couvercle (60-3) permettant d'autoriser, en position ouverte, ou interdire, en position fermée, l'insertion ou l'extraction du terminal de communication dans ou hors de son logement, et comprenant des moyens de fixation amovible du support sur une face d'appairage du dispositif de paiement.

2. Terminal de paiement selon la revendication 1, **caractérisé en ce qu'**il possède une deuxième configuration dans laquelle il comprend ledit dispositif de paiement (20) et une deuxième interface modulaire (70), **en ce que** ladite deuxième interface modulaire comprend un support formant capot (70) pour protéger ladite face d'appairage du dispositif de paiement, et **en ce qu'**il comprend des moyens de fixation amovible du support sur la face d'appairage du dispositif de paiement.

3. Terminal de paiement selon l'une quelconque des revendications 1 et 2, **caractérisé en ce que** les moyens de fixation amovible du support, formant étui ou capot, sur la face d'appairage du dispositif de paiement comprennent :
- un premier ensemble d'éléments de fixation comprenant au moins un couple de premiers éléments de fixation, dont la solidarisation de l'un, compris dans le support, avec l'autre, compris dans le dispositif de paiement, est réalisée par un mouvement de translation du support par rapport au dispositif de paiement ; et
- un deuxième ensemble d'éléments de fixation comprenant au moins un couple de deuxièmes éléments de fixation, dont la solidarisation de l'un, compris dans l'interface modulaire, avec l'autre, compris dans le dispositif de paiement, empêche un mouvement de translation inverse du support par rapport au dispositif de paiement.

4. Terminal de paiement selon la revendication 3, **caractérisé en ce que** ledit premier ensemble comprend :
- au moins un couple comprenant une butée (23a à 23d, 24a à 24d) possédant un épaulement et s'étendant à partir de ladite face d'appairage du dispositif de paiement, et un téton (60-23a à 60-23d, 60-24a à 60-24d ; 70-23a à 70-23d, 70-24a à 70-24d), situé sur une face de fixation du support et destiné à venir s'emboîter dans l'épaulement de la butée à l'issue dudit mouvement de translation ; et/ou
- au moins un couple comprenant une ouverture (26, 27, 29), formée dans ladite face d'appairage du dispositif de paiement, et une patte en forme de L (60-26, 60-27, 60-29 ; 70-26, 70-27, 70-29) s'étendant à partir d'une face de fixation du support et destinée à venir s'emboîter dans l'ouverture à l'issue dudit mouvement de translation.

5. Terminal de paiement selon l'une quelconque des revendications 3 et 4, **caractérisé en ce que** ledit deuxième ensemble comprend :
- au moins un couple comprenant un clip (28), s'étendant à partir de ladite face d'appairage du dispositif de paiement, et une ouverture (60-28, 70-28) formée sur une face de fixation du support et destinée à recevoir ledit clip à l'issue dudit mouvement de translation ; et/ou
- au moins un couple comprenant un taraudage (25), formé dans ladite face d'appairage du dispositif de paiement, et un trou (60-25) formé dans le support, ledit trou venant en regard dudit taraudage à l'issue dudit mouvement de translation de sorte qu'une vis traversant ledit trou et vissée dans ledit taraudage permet d'empêcher le mouvement de translation inverse du support par rapport au dispositif de paiement.

6. Terminal de paiement selon la revendication 5, **caractérisé en ce qu'**il comprend des moyens de déclenchement d'une alarme sur détection d'un dévissage de ladite vis.

7. Terminal de paiement selon l'une quelconque des revendications 5 et 6, **caractérisé en ce que** le support comprend un logement de batterie pouvant loger une batterie principale du dispositif de paiement, et **en ce que** ledit trou est formé dans une face interne dudit logement de batterie.

8. Terminal de paiement selon l'une quelconque des revendications 3 à 6 quand elles dépendent de la revendication 1, **caractérisé en ce que** ledit deuxième ensemble comprend un couple comprenant un logement de batterie principale (215) formé dans ladite face d'appairage du dispositif de paiement, et une trappe de batterie (60-4) permettant de fermer, après ledit mouvement de translation, ledit logement de batterie principale via une ouverture (60-41) formée dans le support, ladite trappe formant une butée permettant d'empêcher le mouvement de translation inverse du support par rapport au dispositif de paiement.

9. Terminal de paiement selon la revendication 8, **caractérisé en ce qu'**il comprend des moyens de déclenchement d'une alarme sur détection d'une ouverture de la trappe de batterie.

10. Terminal de paiement selon l'une quelconque des revendications 3 à 6 quand elles dépendent de la revendication 1, **caractérisé en ce que** ledit deuxième ensemble comprend un couple comprenant une batterie principale amovible pouvant loger dans un logement de batterie principale du dispositif de paiement, et une ouverture (60-41) formée dans le support, ladite batterie principale étant placée dans le logement de batterie principale, après ledit mouvement de translation, et formant une butée permettant d'empêcher le mouvement de translation inverse du support par rapport au dispositif de paiement.

11. Terminal de paiement selon la revendication 7 ou 10, **caractérisé en ce qu'**il comprend des moyens de déclenchement d'une alarme sur détection d'une déconnexion de la batterie principale.

12. Terminal de paiement selon l'une quelconque des revendications 3 à 11 quand elles dépendent de la revendication 1, **caractérisé en ce que** ladite première interface modulaire comprend une carte électronique de connexion (60-5), comprenant un circuit imprimé (60-51) sur lequel sont fixés : un premier connecteur (60-52), permettant de connecter ladite carte au dispositif de paiement, et un deuxième connecteur (60-53), permettant de connecter ladite carte au terminal de communication.

13. Terminal de paiement selon la revendication 12, **caractérisé en ce que** le premier connecteur est emboîté dans une nappe de connexion connectée à une carte mère du dispositif de paiement, **en ce que** le circuit imprimé est inséré, avec un débattement possible, dans une ouverture (214) formée dans la face d'appairage du dispositif de paiement, et **en ce que** la face d'appairage du dispositif de paiement et/ou une face de fixation du support comprennent :
- au moins un élément (213a, 213b) de reprise d'effort à l'insertion du terminal de communication dans son logement, permettant d'emboîter le deuxième connecteur dans un connecteur associé du terminal de communication ; et
- au moins un élément (60-210a, 60-210b) de reprise d'effort à l'extraction du terminal de communication hors de son logement, permettant de désemboîter le deuxième connecteur d'avec le connecteur associé du terminal de communication.

14. Terminal de paiement selon la revendication 13, **caractérisé en ce que** la face d'appairage du dispositif de paiement et/ou une face de fixation du support comprennent :
- au moins un élément (60-21 la, 60-211b) de limitation du débattement possible du circuit imprimé dans ladite ouverture, selon un axe d'insertion du circuit imprimé dans ladite ouverture ; et/ou
- au moins un élément (60-212a, 60-212b) de limitation du débattement possible du circuit imprimé dans ladite ouverture, selon un axe perpendiculaire à l'axe d'insertion du circuit imprimé dans ladite ouverture et compris dans le plan du circuit imprimé.

15. Terminal de paiement selon l'une quelconque des revendications 12 à 14, **caractérisé en ce que** ladite carte électronique de connexion (60-5) comprend des moyens de stockage d'un identifiant, et **en ce que** le dispositif de paiement comprend des moyens de lecture et vérification dudit identifiant et des moyens de déclenchement d'une alarme sur détection d'une vérification incorrecte dudit identifiant.

## Patentansprüche

1. Zahlungsterminal (10), welches eine erste Auslegung besitzt, in der dieses eine Zahlungsvorrichtung (20) umfasst, die mit einem Kommunikationsterminal (30) durch eine erste modulare Schnittstelle (60) gepaart ist, wobei die modulare Schnittstelle einen ein Etui bildenden Träger (60-2) umfasst, das eine Aufnahme (60-1) für das Kommunikationsterminal definiert, und, durch eine Gelenkverbindung, mit einer Abdeckung (60-3) zusammenwirkt, die ein Einführen oder Entnehmen des Kommunikationsterminals in seine oder aus seiner Aufnahme in der offenen Position autorisiert oder in der geschlossenen Position unterbindet, und umfassend Mittel zum abnehmbaren Befestigen des Trägers auf einer Paarbildungsfläche der Zahlungsvorrichtung.

2. Zahlungsterminal nach Anspruch 1, **dadurch gekennzeichnet, dass** dieses eine zweite Auslegung besitzt, in der dieses die Zahlungsvorrichtung (20) und eine zweite modulare Schnittstelle (70) umfasst, dadurch, dass die zweite modulare Schnittstelle einen eine Haube bildenden Träger (70) umfasst, um die Paarbildungsfläche der Zahlungsvorrichtung zu schützen, und dadurch, dass dieses abnehmbare Befestigungsmittel des Trägers auf der Paarbildungsfläche der Zahlungsvorrichtung umfasst.

3. Zahlungsterminal nach einem der Ansprüche 1 und 2, **dadurch gekennzeichnet, dass** die abnehmbaren Befestigungsmittel des Trägers, die ein Etui oder eine Haube bilden, auf der Paarbildungsfläche der Zahlungsvorrichtung umfassen:
- eine erste Einheit von Befestigungselementen, umfassend mindestens ein Paar von ersten Befestigungselementen, wobei die Verbindung des einen, das im Träger enthalten ist, mit dem anderen, das in der Zahlungsvorrichtung enthalten ist, durch eine Translationsbewegung des Trägers in Bezug auf die Zahlungsvorrichtung durchgeführt wird; und
- eine zweite Einheit von Befestigungselementen, umfassend mindestens ein Paar von zweiten Befestigungselementen, wobei die Verbindung des einen, das in der modularen Schnittstelle enthalten ist, mit dem anderen, das in der Zahlungsvorrichtung enthalten ist, eine umgekehrte Translationsbewegung des Trägers in Bezug auf die Zahlungsvorrichtung verhindert.

4. Zahlungsterminal nach Anspruch 3, **dadurch gekennzeichnet, dass** die erste Einheit umfasst:
- mindestens ein Paar, umfassend einen Anschlag (23a bis 23d, 24a bis 24d), der eine Schulter besitzt und sich von der Paarbildungsfläche der Zahlungsvorrichtung erstreckt, und einen Stift (60-23a bis 60-23d, 60-24a bis 60-24d; 70-23a bis 70-23d, 70-24a bis 70-24d), der auf der Befestigungsfläche des Trägers angeordnet ist und dazu bestimmt ist, in die Schulter des Anschlags am Ende der Translationsbewegung einzugreifen; und/oder
- mindestens ein Paar, umfassend eine Öffnung (26, 27, 29), die in der Paarbildungsfläche der Zahlungsvorrichtung gebildet ist, und einen Ansatz in L-Form (60-26, 60-27, 60-29; 70-26, 70-27, 70-29), der sich von einer Befestigungsfläche des Trägers erstreckt und dazu bestimmt ist, in die Öffnung am Ende der Translationsbewegung einzugreifen.

5. Zahlungsterminal nach einem der Ansprüche 3 und 4, **dadurch gekennzeichnet, dass** die zweite Einheit umfasst:
- mindestens ein Paar, umfassend einen Clip (28), der sich von der Paarbildungsfläche der Zahlungsvorrichtung erstreckt, und eine Öffnung (60-28, 70-28), die auf einer Befestigungsfläche des Trägers gebildet ist und dazu bestimmt ist, den Clip am Ende der Translationsbewegung aufzunehmen; und/oder
- mindestens ein Paar, umfassend ein Innengewinde (25), das in der Paarbildungsfläche der Zahlungsvorrichtung gebildet ist, und ein Loch (60-25), das im Träger gebildet ist, wobei das Loch am Ende der Translationsbewegung gegenüber dem Innengewinde derart zu liegen kommt, dass eine Schraube, die das Loch durchquert und in das Innengewinde geschraubt wird, das Verhindern der umgekehrten Translationsbewegung des Trägers in Bezug auf die Zahlungsvorrichtung ermöglicht.

6. Zahlungsterminal nach Anspruch 5, **dadurch gekennzeichnet, dass** dieses Mittel zum Auslösen eines Alarms bei der Detektion eines Losschraubens der Schraube umfasst.

7. Zahlungsterminal nach einem der Ansprüche 5 und 6, **dadurch gekennzeichnet, dass** der Träger eine Batterieaufnahme umfasst, die eine Hauptbatterie der Zahlungsvorrichtung aufnehmen kann, und dadurch, dass das Loch in einer Innenfläche der Batterieaufnahme gebildet ist.

8. Zahlungsterminal nach einem der Ansprüche 3 bis 6, wenn diese von Anspruch 1 abhängig sind, **dadurch gekennzeichnet, dass** die zweite Einheit ein Paar umfasst, umfassend eine Hauptbatterieaufnahme (215), die in der Paarbildungsfläche der Zahlungsvorrichtung gebildet ist, und eine Batterieklappe (60-4), die es ermöglicht, nach der Translationsbewegung, die Hauptbatterieaufnahme über eine Öffnung (60-41) zu schließen, die im Träger gebildet ist, wobei die Klappe einen Anschlag bildet, der es ermöglicht, die umgekehrte Translationsbewegung des Trägers in Bezug auf die Zahlungsvorrichtung zu verhindern.

9. Zahlungsterminal nach Anspruch 8, **dadurch gekennzeichnet, dass** dieses Mittel zum Auslösen eines Alarms bei der Detektion eines Öffnens der Batterieklappe umfasst.

10. Zahlungsterminal nach einem der Ansprüche 3 bis 6, wenn diese von Anspruch 1 abhängig sind, **dadurch gekennzeichnet, dass** die zweite Einheit ein Paar umfasst, umfassend eine abnehmbare Hauptbatterie, die in einer Aufnahme der Hauptbatterie der Zahlungsvorrichtung aufgenommen werden kann, und eine Öffnung (60-41), die im Träger gebildet ist, wobei die Hauptbatterie, nach der Translationsbewegung, in die Hauptbatterieaufnahme platziert wird, und einen Anschlag bildet, der es ermöglicht, die umgekehrte Translationsbewegung des Trägers in Bezug auf die Zahlungsvorrichtung zu verhindern.

11. Zahlungsterminal nach 7 oder 10, **dadurch gekennzeichnet, dass** dieses Mittel zum Auslösen eines Alarms bei der Detektion eines Trennens der Hauptbatterie umfasst.

12. Zahlungsterminal nach einem der Ansprüche 3 bis 11, wenn diese von Anspruch 1 abhängig sind, **dadurch gekennzeichnet, dass** die erste modulare Schnittstelle eine elektronische Verbindungskarte (60-5) umfasst, umfassend eine gedruckte Schaltung (60-51), auf der befestigt sind: ein erster Verbinder (60-52), der es ermöglicht, die Karte mit der Zahlungsvorrichtung zu verbinden, und ein zweiter Verbinder (60-53), der es ermöglicht, die Karte mit dem Kommunikationsterminal zu verbinden.

13. Zahlungsterminal nach Anspruch 12, **dadurch gekennzeichnet, dass** der erste Verbinder in einer Verbindungslitze aufgenommen ist, die mit einer Hauptkarte der Zahlungsvorrichtung verbunden ist, dadurch, dass die gedruckte Schaltung mit einer möglichen Verschiebung in eine Öffnung (214) eingeführt wird, die in der Paarbildungsfläche der Zahlungsvorrichtung gebildet ist, und dadurch, dass die Paarbildungsfläche der Zahlungsvorrichtung und/oder eine Befestigungsfläche des Trägers umfassen:
- mindestens ein Element (213a, 213b) zur Aufnahme der Kraft beim Einführen des Kommunikationsterminals in seine Aufnahme, wobei ermöglicht wird, dass der zweite Verbinder in einem assoziierten Verbinder des Kommunikationsterminals aufgenommen wird; und
- mindestens ein Element (60-210a, 60-210b) zur Aufnahme der Kraft beim Entnehmen des Kommunikationsterminals aus seiner Aufnahme, wobei ermöglicht wird, dass der zweite Verbinder aus dem assoziierten Verbinder des Kommunikationsterminals entnommen wird.

14. Zahlungsterminal nach Anspruch 13, **dadurch gekennzeichnet, dass** die Paarbildungsfläche der Zahlungsvorrichtung und/oder eine Befestigungsfläche des Trägers umfassen:
- mindestens ein Element (60-211a, 60-211b) zur Begrenzung der möglichen Verschiebung der gedruckten Schaltung in der Öffnung in einer Einführachse der gedruckten Schaltung in die Öffnung; und/oder
- mindestens ein Element (60-212a, 60-212b) zur Begrenzung der möglichen Verschiebung der gedruckten Schaltung in der Öffnung in einer Achse rechtwinklig zur Einführachse der gedruckten Schaltung in die Öffnung und in der Ebene der gedruckten Schaltung.

15. Zahlungsterminal nach einem der Ansprüche 12 bis 14, **dadurch gekennzeichnet, dass** die elektronische Verbindungskarte (60-5) Mittel zum Speichern eines Identifikators umfasst, und dadurch, dass die Zahlungsvorrichtung Mittel zum Lesen und Verifizieren des Identifikators und Mittel zum Auslösen eines Alarms bei der Detektion einer inkorrekten Verifikation des Identifikators umfasst.

## Claims

1. Payment terminal possessing a first configuration in which it comprises a payment device (20) paired with a communications terminal (30) by a first modular interface (60), said first modular interface comprising a case-forming support (60-2) defining a housing (60-1) for the communications terminal and cooperating, by hinging, with a lid (60-3) making it possible to permit, in an open position, or to prohibit, in a closed position, the insertion or the removal of the communications terminal into or from its housing, and comprising means for detachably attaching the support to a pairing face of the payment device.

2. Payment terminal according to claim 1, **characterized in that** it possesses a second configuration in which it comprises said payment device (20) and a second modular interface (70), **in that** said second modular interface comprises a hood-forming support (70) to protect said pairing face of the payment device and **in that** it comprises a means for detachably attaching the support to the pairing face of the payment device.

3. Payment terminal according to either of the claims 1 and 2, **characterized in that** the means for detachably attaching the case-forming or hood-forming support to the pairing face of the payment device comprise:
- a first set of attachment elements comprising at least one pair of first attachment elements, where the fixed attachment of one, included in the support, to the other, included in the payment device, is obtained by a motion of translation of the support relative to the payment device, and
- a second set of attachment elements comprising at least one pair of second attachment elements, where the fixed attachment of one, included in the modular interface, to the other, included in the payment device, prevents a motion of reverse translation of the support relative to the payment device.

4. Payment terminal according to claim 3, **characterized in that** said first set comprises:
- at least one pair comprising a stop (23a à 23d, 24a à 24d) possessing a shoulder and extending from said pairing face of the payment device and a catch (60-23a to 60-23d, 60-24a to to 60-24d ; 70-23a to 70-23d, 70-24a to 70-24d) situated on an attachment face of the support and intended to be fitted into the shoulder of the stop at the end of said motion of translation; and/or
- at least one pair comprising an aperture (26, 27, 29) formed in said pairing face of the payment device and an L-shaped tab (60-26, 60-27, 60-29 ; 70-26, 70-27, 70-29) extending from an attachment face of the support and intended to be fitted into the aperture at the end of said motion of translation.

5. Payment terminal according to either of the claims 3 and 4, **characterized in that** said second set comprises:
- at least one pair comprising a clip (28), extending from said pairing face of the payment device, and an aperture (60-28, 70-28) formed on an attachment face of the support and intended for receiving said clip at the end of said motion of translation; and/or
- at least one pair comprising a thread (25), formed in said pairing face of the payment device, and a hole (60-25) formed in the support, said hole coming to face the thread at the end of said motion of translation so that a screw passing through said hole and screwed into said thread prevents the motion of reverse translation of the support relative to the payment device.

6. Payment terminal according to claim 5, **characterized in that** it comprises means for triggering an alarm upon detection of an unscrewing of said screw.

7. Payment terminal according to either of the claims 5 and 6, **characterized in** the support comprises a battery housing capable of housing a main battery of the payment device and **in that** said hole is formed in an internal face of said battery housing.

8. Payment terminal according to any one of the claims 3 to 6 when they depend on claim 1, **characterized in that** said second set comprises a pair comprising a main battery housing (215) formed in said pairing face of the payment device and a battery cover (60-4) making it possible, after said motion of translation, to close said housing of the main battery through an aperture (60-41) formed in the support, said cover forming a stop to prevent the motion of reverse translation of the support relative to the payment device.

9. Payment terminal according to claim 8, **characterized in that** it comprises means to trigger an alarm upon detection of an aperture of the payment cover.

10. Payment terminal according to any one of the claims 3 to 6 when they depend on claim 1, **characterized in that** said second set comprises a pair comprising a detachable main battery capable of being housed in a main battery housing of the payment device, and an aperture (60-41) formed in the support, said main battery being placed in the main battery housing after said motion of translation and forming a stop to prevent the motion of reverse translation of the support relative to the payment device.

11. Payment terminal according to claim 7 or 10, **characterized in that** it comprises means to trigger an alarm upon detection of a disconnection of the main battery.

12. Payment terminal according to any one of the claims 3 to 11 when they depend on claim 1, **characterized in that** said first modular interface comprises an electric connection card (60-5) comprising a printed circuit (60-51) to which there are fixed: a first connector (60-52) enabling the connection of said card to the payment device, and a second connector (60-53) enabling the connection of said card to the communications terminal.

13. Payment terminal according to claim 12, **characterized in that** the first connector is fitted into a ribbon cable connector connected to a motherboard of the payment device, **in that** the printed circuit is inserted, with a possible travel, into an aperture (214) in the pairing face of the payment device, and **in that** the pairing face of the payment device and/or an attachment face of the support comprise:
- at least one element (213a, 213b) for absorbing stresses when the communications terminal is inserted into its housing, making it possible to fit the second connector into an associated connector of the communications terminal; and
- at least one element (60-210a, 60-210b) for absorbing stresses when the communications terminal is removed from its housing, enabling the second connector to be detached from the connector associated with the communications terminal.

14. Payment terminal according to claim 13, **characterized in that** the pairing face of the payment device and/or an attachment face of the support comprise:
- at least one element for limiting the possible travel of the printed circuit in said aperture, along an axis of insertion of the printed circuit in said aperture, and/or
- at least one element for limiting the possible travel of the printed circuit in said aperture along an axis perpendicular to the axis of insertion of the printed circuit in said aperture and contained in the plane of the printed circuit.

15. Payment terminal according to any one of the claims 12 to 14, **characterized in that** said electronic connection card (60-5) comprises means for storing an identifier and the payment device comprises means for reading and checking said identifier and means for triggering an alarm upon detection of an incorrect verification of said identifier.
